# FASCICULE DE BREVET EUROPEEN

(11) **EP 3 727 952 B1**
(45) Date de publication et mention de la délivrance du brevet: **02.03.2022**
(21) Numéro de dépôt: 17828759.5
(22) Date de dépôt: 22.12.2017
(51) Int. Cl.: B60R 21/264, F42B 3/04, B60R 21/26

(54) **GÉNÉRATEUR DE GAZ POUR SYSTÈME DE SÉCURITÉ**
GASGENERATOR FÜR EIN SICHERHEITSSYSTEM
GAS GENERATOR FOR A SAFETY SYSTEM

(43) Date de publication de la demande: 28.10.2020
(73) Titulaire: Autoliv Development AB, 447 83 Vårgårda (SE)
(72) Inventeur: PRIMA, Gerald, 29510 Landrevarzec (FR); POGEANT, Ludovic, 29000 Quimper (FR); COX, Matthew A., Centerville, Utah 84014 (US); SMITH, Kevin, Bountiful, Utah 84010 (US)
(74) Mandataire: Poindron, Cyrille
(86) Numéro de dépôt international: PCT/EP2017/084561
(87) Numéro de publication internationale: WO 2019/120591

(56) Documents cités:
- WO-A1-2017/103135
- FR-A1- 2 922 007

## Description

La présente invention concerne de manière générale un générateur de gaz pour système de sécurité tel qu'un airbag et plus particulièrement un générateur de gaz dont des composants sont assemblés par une soudure par friction telle qu'une soudure par inertie.

Il est connu dans l'art antérieur des générateurs assemblés selon un procédé de soudure décrit dans le document WO2017103135. Ce document propose de souder une première et une deuxième pièce simultanément sur une troisième, les zones de soudure de la première et de la deuxième pièce étant très proches l'une de l'autre. Cette proximité des zones de soudure peut dégrader, dans certains cas, certaines caractéristiques des soudures relatives à un niveau d'étanchéité. En effet, les zones de soudure peuvent influer l'une sur l'autre ou déformer la pièce soudée adjacente.

Un but de la présente invention est de répondre aux inconvénients du document de l'art antérieur mentionné ci-dessus et en particulier, tout d'abord, de proposer un générateur de gaz dont les soudures sont améliorées.

Pour cela un premier aspect de l'invention concerne un générateur de gaz pour système de sécurité comprenant :
- au moins une matière pyrotechnique agencée pour produire des gaz,
- une première pièce,
- une deuxième pièce,
- une troisième pièce,
- et une quatrième pièce distincte des précédentes,
la première pièce et la deuxième pièce étant soudées par friction à la troisième pièce, caractérisé en ce que la quatrième pièce comprend :
- une première interface de positionnement avec la première pièce,
- une deuxième interface de positionnement avec la deuxième pièce, de sorte à bloquer temporairement au moins un degré de liberté entre la première et la deuxième pièce pour permettre une opération de soudure par friction simultanée de la première et de la deuxième pièce sur la troisième pièce.

L'opération de soudure par friction utilise la friction entre deux pièces en rotation l'une par rapport à l'autre selon un axe de soudure pour générer de la chaleur à l'interface des deux pièces et les assembler, du fait leur fusions, lors de l'application d'une force suivant l'axe de soudure. Pour se faire dans la présente application, la deuxième pièce est positionnée, de manière réversible (jusqu'à l'opération de soudure), par rapport à la première pièce par l'intermédiaire de la quatrième pièce. Une fois ce sous-ensemble formé, il est ensuite soudé par l'opération de soudure par friction à la troisième pièce. Ainsi, la première pièce et la deuxième pièce sont soudées simultanément à la troisième pièce en une seule et même opération de soudure. Lors de l'opération de soudure, des bourrelets de soudure sont générés aux niveaux de zones de contact entre la première pièce et la troisième pièce et entre la deuxième pièce et la troisième pièce.

La quatrième pièce permet d'améliorer le positionnement de la deuxième par rapport à la première de sorte à améliorer la qualité des soudures générées lors de l'opération de soudure par friction. En effet, la quatrième pièce permet de limiter voire supprimer les contacts entre la première et la deuxième pièce. Cela permet de laisser de la place aux bourrelets de soudure lors de leurs formations.

En bloquant au moins un degré de liberté entre la première et la deuxième pièce, la quatrième pièce, par la première et la deuxième interface de positionnement, bloque au moins une translation de la deuxième pièce par rapport à la première, typiquement selon l'axe de soudure de l'opération de soudure par friction. La quatrième pièce peut aussi permettre de bloquer une rotation de la deuxième pièce par rapport à la première, typiquement autour ou selon l'axe de soudure de l'opération de soudure par friction.

Au moins un degré de liberté est bloqué temporairement lorsque les première, deuxième et quatrième pièces forment un sous-ensemble avant l'opération de soudure par friction. Une fois l'opération de soudure par friction, ce sont une soudure entre la première et la troisième pièce d'une part et une soudure entre la deuxième et la troisième pièce d'autre part qui figent le positionnement de la deuxième pièce par rapport à la première pièce.

Avantageusement, la deuxième pièce est montée dans la première pièce.

Avantageusement, la première interface de positionnement et la deuxième interface de positionnement sont agencées de sorte qu'un mouvement de rotation ou de translation de la première pièce lors de l'opération de soudure par friction entraine la deuxième pièce. En d'autres termes, la quatrième pièce permet d'éviter tout mouvement relatif en rotation et/ou en translation entre la première et la deuxième pièce. Autrement dit, la deuxième pièce est entraînée par la première, via la quatrième pièce.

Avantageusement,
- la première pièce comprend une première interface de soudure,
- la deuxième pièce comprend une deuxième interface de soudure,
et un espace est défini entre la deuxième interface de soudure et la première interface de soudure avant l'opération de soudure par friction simultanée des première et deuxième pièces sur la troisième pièce.

Une interface de soudure est une partie de pièce qui est physiquement affectée par l'opération de soudure. Typiquement, pour une opération de soudure par friction, une interface de soudure est une extrémité de pièce de forme cylindrique ou cylindrique circulaire d'une épaisseur prédéterminée. Le fait de garantir un espace entre l'interface de soudure de la première pièce et l'interface de soudure de la deuxième pièce permet d'éviter toute interférence qui pourrait apparaitre entre un bourrelet généré lors de la soudure de la première interface de soudure et un autre bourrelet généré lors la soudure de la deuxième interface de soudure. Un contact entre les deux bourrelets, notamment en début de soudure peut dégrader l'une ou l'autre des soudures et notamment l'étanchéité des soudures. L'étanchéité procurée par la soudure par friction permet de garantir un stockage de la matière pyrotechnique à l'abri de l'eau pendant une longue période (jusqu'à 15 ans par exemple).

Avantageusement, avant l'opération de soudure par friction, l'espace défini entre la deuxième interface de soudure et la première interface de soudure est compris entre une épaisseur de la deuxième pièce au niveau de la deuxième interface de soudure et une épaisseur de la première pièce au niveau de la première interface de soudure.

Un espace ajusté permet d'utiliser au mieux la chaleur dégagée lors de l'opération de soudure par friction tout en garantissant un espace nécessaire à la formation des bourrelets de soudure. Cela est particulièrement intéressant lorsque l'épaisseur d'une des pièces au niveau de son interface de soudure est notablement différent de l'autre pièce.

Par exemple lorsqu'une épaisseur de la deuxième pièce au niveau de la deuxième interface de soudure est comprise entre 33% et 66% d'une épaisseur de la première pièce au niveau de la première interface de soudure et/ou lorsque l'épaisseur de la deuxième pièce au niveau de la deuxième interface de soudure est comprise entre 33% et 66% d'une épaisseur de la troisième pièce en regard de la deuxième interface de soudure.

En effet, pour garantir une soudure robuste, il faut atteindre une température donnée au niveau de la zone soudée, température atteinte avec certains paramètres de soudure (vitesse de rotation, effort appliqué pendant l'opération...). Lorsqu'il y a un différentiel d'épaisseur entre deux pièces soudées, la difficulté est d'échauffer suffisamment la pièce la plus épaisse sans pour autant atteindre des températures trop importantes qui pourraient dégrader la pièce la plus fine. Un faible espace tel que revendiqué, permet d'utiliser l'échauffement généré par la friction de la première pièce sur la troisième pièce (les pièces les plus épaisses) pour la soudure de la deuxième pièce (la plus fine) sur la troisième pièce.

Typiquement, on peut prévoir un espace compris entre 1 mm et 3 mm.

L'espace se mesure entre l'intérieur de la première pièce et l'extérieur de la deuxième pièce au niveau de leurs interfaces de soudure respectives selon une direction perpendiculaire à un axe de soudure. En d'autres termes, l'espace correspond à la différence entre un rayon intérieur de la première pièce au niveau de la première interface de soudure et un rayon extérieur de la deuxième pièce au niveau de la deuxième interface de soudure

Avantageusement, la première interface de positionnement et la deuxième interface de positionnement sont agencées de sorte à bloquer temporairement six degrés de liberté entre la première et la deuxième pièce avant l'opération de soudure par friction.

En d'autres termes, il n'y a aucun contact entre la première et la deuxième pièce avant l'opération de soudure. L'espace entre les deux pièces est libre lors de la formation des bourrelets de soudure des deux pièces. Cela permet d'assurer un positionnement optimal de la deuxième pièce pour garantir une soudure robuste.

Avantageusement, la première pièce est une chambre contenant la matière pyrotechnique, la deuxième pièce est un opercule et la troisième pièce est un diffuseur.

Ce mode de réalisation permet de fermer la chambre de manière étanche par l'opercule sans liaison étanche directe entre l'opercule et la chambre.

Avantageusement, la quatrième pièce est une grille agencée pour retenir la matière pyrotechnique pendant un fonctionnement du générateur de gaz.

Dans ce mode de réalisation, la quatrième pièce a deux fonctions à savoir le positionnement de la deuxième pièce par rapport à la première avant et pendant la phase de soudure et la rétention de la matière pyrotechnique pendant le fonctionnement du générateur. La construction du générateur est donc optimisée car le nombre de pièces le constituant est réduit.

Avantageusement, avant l'opération de soudure par friction, une épaisseur de la deuxième pièce au niveau de la deuxième interface de soudure est comprise entre 33% et 66% d'une épaisseur de la première pièce au niveau de la première interface de soudure.

L'invention permet de souder simultanément deux pièces d'épaisseurs différentes sur la troisième pièce. Cela est particulièrement avantageux lorsque l'on veut fermer une chambre devant résister à une combustion de matière pyrotechnique par un opercule qui doit céder à une pression prédéterminée.

Avantageusement, l'épaisseur de la deuxième pièce au niveau de la deuxième interface de soudure est comprise entre 33% et 66% d'une épaisseur de la troisième pièce en regard de la deuxième interface de soudure.

Avantageusement, l'épaisseur de la deuxième pièce au niveau de la deuxième interface de soudure est comprise entre 0,5 et 1mm et l'épaisseur de la première pièce au niveau de la première interface de soudure est comprise entre 1,3 et 3mm.

Avantageusement, avant l'opération de soudure par friction, lorsque la première, la deuxième et la troisième pièce forment un sous-ensemble, un deuxième plan de soudure formé par la deuxième interface de soudure est décalé d'un premier plan de soudure formé par la première interface de soudure (ou agencé au niveau ou sous le premier plan de soudure de la première interface de soudure) de sorte que la deuxième pièce touche la troisième pièce simultanément ou préférentiellement après que la première pièce touche la troisième pièce.

Cela permet de limiter des risques de flambement de la deuxième interface de soudure lors de l'opération de soudure par friction.

Avantageusement, un diamètre circonscrit à la deuxième interface de soudure est le plus grand diamètre circonscrit de la deuxième pièce.

Selon ce mode de réalisation, la deuxième interface de soudure est moins sujette à la déformation lors de l'opération de soudure et notamment un effort de forgeage. Une déformation non maitrisée est préjudiciable car si l'interface de soudure se dérobe lors de la soudure, le bourrelet de soudure ne se formera pas correctement et la qualité de la soudure sera dégradée. En d'autres termes, la deuxième interface de soudure est une paroi de pièce cylindrique circulaire dont le premier pli est un pli vers un axe de révolution de la pièce. L'axe de révolution de la pièce se confond avec l'axe de soudure lors de l'opération de soudure par friction.

Avantageusement, la première interface de positionnement de la quatrième pièce présente une surface de contact continue avec la première pièce.

La surface de contact continue permet d'éviter tout passage de projection (typiquement un copeau incandescent) de soudure au niveau de la première interface. Une telle projection peut allumer la matière pyrotechnique quand celle-ci est chargée à l'intérieur de la première pièce.

Avantageusement, les première et deuxième interfaces de soudure présentent une forme cylindrique.

Des interfaces de soudure cylindriques et en particulier cylindrique circulaire sont particulièrement adaptées à la soudure par friction.

Avantageusement,
les première, deuxième et quatrième pièces présentent des formes de coupelles avec un fond et une surface latérale,
une portion de la surface latérale externe de la quatrième pièce est en appui sur une portion de la surface latérale interne de la première pièce et une portion de la surface latérale externe de la deuxième pièce est en appui sur une portion de la surface latérale interne de la quatrième pièce.

En d'autres termes, les deuxième et quatrième pièces sont contenues dans la première pièce. En outre, cela permet un emboitement compact des première, deuxième et quatrième pièces.

Avantageusement, la deuxième interface de positionnement est une forme male complémentaire d'une forme femelle de la deuxième pièce.

Ces formes permettent un bon engrainement de la deuxième pièce avec la quatrième pièce pour bloquer toute rotation relative d'une pièce par rapport à l'autre.

Avantageusement, le générateur de gaz comprend une cinquième pièce positionnée entre la deuxième et la troisième pièce, la forme femelle de la deuxième pièce étant agencée pour positionner la cinquième pièce par rapport à la troisième pièce.

La cinquième pièce peut être un filtre. La deuxième pièce permet de garantir la présence d'un espace entre le filtre et la troisième pièce, notamment lorsque la troisième pièce est un diffuseur. Les écoulements de gaz lors du fonctionnement du générateur sont optimisés.

Avantageusement,
la deuxième interface de positionnement est formée par une jonction entre la surface latérale et le fond de la quatrième pièce et
la forme femelle de la deuxième pièce est formée par une jonction entre la surface latérale et le fond de la deuxième pièce.

Formé de la sorte, la deuxième pièce est plus facile à fabriquer, plus simple et plus résistante car la forme femelle, en plus de participer au positionnement de la deuxième pièce, participe à renforcer la jonction la surface latérale et le fond de la deuxième pièce. Il en est de même pour la quatrième pièce.

Avantageusement,
la première interface de positionnement est une forme femelle complémentaire d'une forme male de la première pièce,
la première interface de positionnement est formée par une jonction entre la surface latérale et le fond de la quatrième pièce et
la forme male de la première pièce est située sur la surface latérale de la première pièce.

Lorsque la quatrième pièce est à l'intérieur de la première pièce, la forme male de la première pièce est située sur la surface latérale intérieure de la première pièce.

Un second aspect de l'invention concerne un module de sécurité comprenant un générateur de gaz selon le premier aspect de l'invention.

Un troisième aspect de l'invention concerne un véhicule automobile comprenant un générateur de gaz selon le premier aspect de l'invention.

Un dernier aspect de l'invention concerne un procédé de fabrication d'un générateur de gaz selon le premier aspect, comprenant les étapes consistant à :
- positionner la quatrième pièce sur la première pièce par l'intermédiaire de la première interface de positionnement,
- positionner la deuxième pièce sur la quatrième pièce par l'intermédiaire de la deuxième interface de positionnement,
- effectuer l'opération de soudure par friction simultanée des première et deuxième pièces sur la troisième pièce.

En d'autres termes, le procédé de fabrication propose de former un sous-ensemble en assemblant, de manière réversible jusqu'à l'opération de soudure par friction, la première, la deuxième et la quatrième pièce avant de souder le sous-ensemble sur la troisième pièce.

Avantageusement, l'opération de soudure comprend une étape consistant à :
- maintenir par un outillage de soudure la première pièce,
   la quatrième pièce permettant, par l'intermédiaire de la première et de la deuxième interface de positionnement, d'éviter tout mouvement relatif de la deuxième pièce par rapport à la première pièce.

Il s'entend par éviter tout mouvement, empêcher tout mouvement qui ne permettrait pas d'obtenir une soudure dont les critères d'étanchéité et de résistance ne répondraient pas aux critères nécessaires pour la fabrication de générateurs de gaz.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de côté d'un générateur selon l'invention.
- la figure 2 représente une vue isométrique éclatée de certains composants du générateur de la figure 1.
- la figure 3a représente une vue en coupe du générateur de la figure 1, avant une opération de soudure par friction, selon l'axe A-A défini à la figure 1.
- la figure 3b représente le générateur de la figure 3a après l'opération de soudure par friction.
- la figure 4 représente une vue en coupe du générateur de la figure 3a, selon l'axe B-B défini à la figure 3a.
- la figure 5 représente une vue en coupe du générateur de la figure 4, selon l'axe C-C défini à la figure 4.

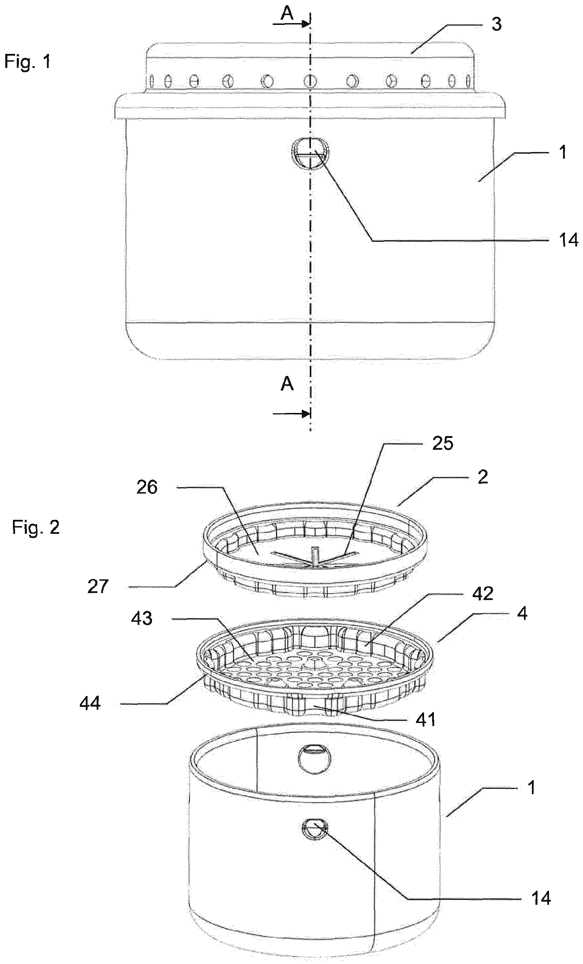

La figure 1 représente un générateur de gaz pour airbag de forme discoïde, utilisé généralement pour protections frontales, et comprend une première pièce formant une chambre 1 qui est soudée sur une troisième pièce formant un diffuseur 3. Le diffuseur 3 comprend des trous de diffusion à sa périphérie pour diffuser, dans un airbag non représenté, des gaz de combustion d'une matière pyrotechnique 6 contenue dans le générateur de gaz.

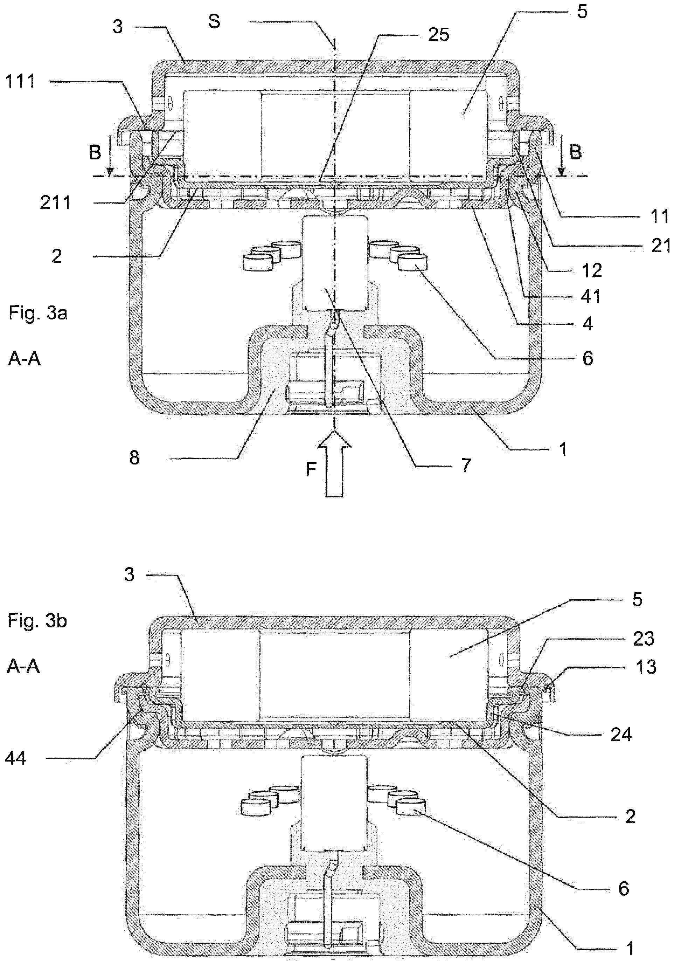

La surface latérale de la chambre 1 comprend des déformations 14 qui sont les parties visibles de l'extérieur du générateur de formes males 12 visibles sur la figure 3a.

La figure 2 représente trois composants du générateur de gaz non assemblé suivant en vue isométrique : la chambre 1, une deuxième pièce qui est un opercule 2 et une quatrième pièce qui est une grille 4.

La chambre 1 et le diffuseur 3 sont les composants les plus épais car ils doivent résister à la pression de fonctionnement du générateur, lors de la combustion de la matière pyrotechnique. On peut prévoir une épaisseur comprise dans une plage allant de 1.3 mm à 3.5 mm.

L'opercule 2 présente des zones de faiblesse 25 qui sont des zones d'épaisseurs réduites agencées pour se rompre à une pression prédéterminée lors du fonctionnement du générateur. L'opercule 2 n'ayant pas à résister à la pression de fonctionnement, il peut être d'épaisseur plus fine, par exemple entre 33 et 66% plus fin que la chambre 1 ou le diffuseur 3. On peut prévoir une épaisseur comprise dans une plage allant de 0.3 mm à 1.2 mm.

La grille 4 comprend une première interface de positionnement 41 avec la chambre 1 et une deuxième interface de positionnement 42 avec l'opercule 2. La forme de coupelle de la grille 4 et de l'opercule 2 sont bien visibles sur cette vue. La grille 4 comprend un fond 43 et une surface latérale 44 alors que l'opercule 2 comprend un fond 26 et une surface latérale 27.

La figure 3a représente une vue en coupe du générateur de la figure 1, avant une opération de soudure par friction, selon l'axe A-A défini à la figure 1. Le générateur comprend une matière pyrotechnique 6 définie de sorte à produire du gaz lorsqu'elle est initiée par un allumeur 7 électro-pyrotechnique. L'allumeur 7 est lié de matière étanche à la chambre 1 par un surmoulage 8. Avant d'être diffusés dans l'airbag, les gaz sont refroidis par un filtre 5.

Cette vue avant soudure, permet de visualiser le sous-ensemble composé de la chambre 1 contenant la matière pyrotechnique 6 et la grille 4 et fermé par l'opercule 2 qui est en position pour être soudé sur le diffuseur 3. Pour ce faire, le diffuseur 3 est mis en rotation autour de l'axe de soudure S et, pendant le mouvement de rotation, le sous-ensemble est appuyé avec une force F sur le diffuseur 3.

A cet effet, la chambre 1 comprend une première interface de soudure 11 définissant un premier plan de soudure 111 alors que l'opercule 2 comprend une deuxième interface de soudure 21 définissant un deuxième plan de soudure 211. Le deuxième plan de soudure 211 est situé sous le premier plan de soudure, c'est-à-dire que le deuxième plan de soudure 211 est compris à l'intérieur d'un volume formé par la chambre 1 fermé par le premier plan de soudure 111. En d'autres termes, lors de l'application de l'effort F durant l'opération de soudure, le premier plan de soudure 111 touche le diffuseur 3 avant le deuxième plan de soudure. Typiquement, le décalage est d'environ 0.5 mm ±0.25 mm.

La première interface de positionnement 41 permet de positionner la grille 4 par rapport à la chambre 1 suivant une direction perpendiculaire à l'axe de soudure S et positionne aussi la grille 4 dans la chambre 1.

La figure 3b représente le générateur de la figure 3a après l'opération de soudure. Le filtre 5 est en contact à la fois sur l'opercule 2 et sur le diffuseur 3.

L'opercule 2 comprend une forme femelle 24 creuse qui permet de positionner le filtre 5 par rapport au diffuseur 3 et notamment de garantir un espace radial entre le filtre et une surface intérieure du diffuseur 3 de sorte à assurer un écoulement sans restriction aux gaz produits par la matière pyrotechnique 6 lors du fonctionnement du générateur de gaz.

Une partie de la première interface de soudure 11 a disparu sous forme d'un premier bourrelet de soudure 13 entre la chambre 1 et le diffuseur 3. Une partie de la deuxième interface de soudure 21 a disparu sous forme d'un deuxième bourrelet de soudure 23 entre l'opercule 2 et le diffuseur 3.

La grille 4 présente une surface latérale 44 en contact continu avec une surface intérieure de la première pièce 1. Cela limite tout risque de projection de particule de soudure vers la matière pyrotechnique à travers la première interface de positionnement 41.

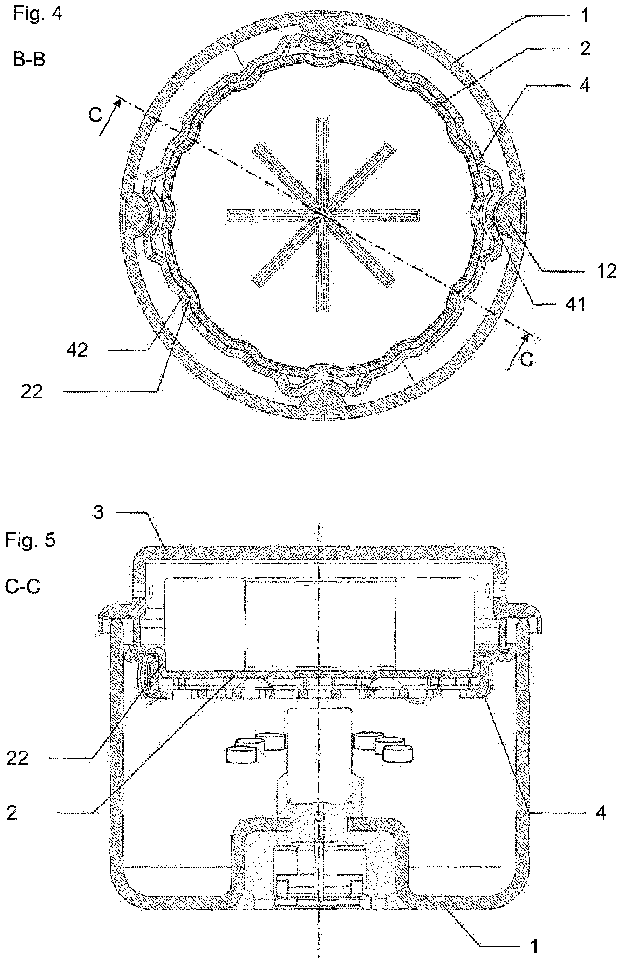

La figure 4 représente une vue en coupe du générateur de la figure 3a, selon l'axe B-B défini à la figure 3a. Les première et deuxième interfaces de positionnement de la grille 4 sont mieux visibles.

La première interface 41 est une forme femelle positionnée sur une surface latérale extérieure de la grille. Sa forme est complémentaire d'une forme male 12 formée sur une paroi latérale intérieure de la chambre 1 de sorte à éviter toute rotation de la grille 4 autour de l'axe de soudure S par rapport à la chambre 1. Ce mode de réalisation comporte quatre premières interfaces 41. Ce nombre est à ajuster en fonction des efforts nécessaires à l'opération de soudure.

La deuxième interface 42 est une forme male positionnée sur une surface latérale intérieure de la grille. Sa forme est complémentaire d'une forme femelle 22 formée sur une paroi latérale extérieure de l'opercule 2 de sorte à éviter toute rotation de l'opercule 2 autour de l'axe de soudure S par rapport à la grille 3. Ce mode de réalisation comporte huit premières interfaces 42. Ce nombre est à ajuster en fonction des efforts nécessaires à l'opération de soudure.

La figure 5 représente une vue en coupe du générateur de la figure 4, selon l'axe C-C défini à la figure 4. Elle permet de mieux visualiser l'interaction entre la deuxième interface de positionnement 42 et l'opercule 2 en particulier au niveau de la forme femelle 22. La deuxième interface de positionnement 42 permet de positionner l'opercule 2 par rapport à la grille 4 suivant une direction perpendiculaire à l'axe de soudure S et positionne aussi l'opercule 2 dans la chambre 1 suivant l'axe de soudure S. En d'autres termes, la deuxième interface de positionnement 42 sert de butée axiale à l'opercule 2, notamment durant l'opération de soudure. Ainsi, la deuxième interface de soudure 21 ne peut pas se dérober, notamment du fait d'une flexion de l'opercule 2, durant l'application de l'effort F lors de l'opération de soudure. Dans ce mode de réalisation, l'interface de soudure est ainsi supportée, selon l'axe de soudure S, sur plus de 70% de sa périphérie. Cela permet d'assurer une étanchéité satisfaisante de la soudure. On peut pratiquer un test d'étanchéité à l'hélium pour vérifier que la soudure répond aux spécifications d'étanchéité courantes dans la sécurité automobile telle que la norme USCAR-24 2ème révision du mois d'avril 2013. Par exemple, pour un générateur tout pyrotechnique, une chambre de combustion avec un taux de fuite Hélium inférieur à 1.10⁻⁴ cm³.atm⁻¹.s⁻¹ peut être considérée comme étanche (avec 100% d'hélium initialement dans la chambre de combustion).

La deuxième interface de soudure 21 est une paroi cylindrique circulaire d'axe S. Le premier pli présent le long de la paroi est un pli vers l'intérieur de la pièce, c'est dire vers l'axe S. Ainsi, un diamètre circonscrit à la deuxième interface de soudure 21 est le plus grand diamètre circonscrit de l'opercule 2. Cela réduit encore plus tout risque de flexion de l'interface de soudure 21 durant l'opération de soudure.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à une chambre 1 comme première pièce, un opercule comme deuxième pièce et une diffuseur 3 comme troisième pièce. L'invention peut être appliquée à toutes autres pièces d'un générateur de gaz soudées par friction.

## Revendications

1. Générateur de gaz pour système de sécurité comprenant :
- au moins une matière pyrotechnique (6) agencée pour produire des gaz,
- une première pièce (1),
- une deuxième pièce (2),
- une troisième pièce (3),
- et une quatrième pièce (4) distincte des précédentes,
la première pièce (1) et la deuxième pièce (2) étant soudées par friction à la troisième pièce (3),
**caractérisé en ce que** la quatrième pièce (4) comprend :
- une première interface de positionnement (41) avec la première pièce (1),
- une deuxième interface de positionnement (42) avec la deuxième pièce (2), de sorte à bloquer temporairement au moins un degré de liberté entre la première et la deuxième pièce pour permettre une opération de soudure par friction simultanée de la première et de la deuxième pièce sur la troisième pièce (3).

2. Générateur de gaz selon la revendication précédente, dans lequel la première interface de positionnement (41) et la deuxième interface de positionnement (42) sont agencées de sorte qu'un mouvement de rotation ou de translation de la première pièce (1) lors de l'opération de soudure par friction entraine la deuxième pièce (2).

3. Générateur de gaz selon l'une des revendications précédentes, dans lequel :
- la première pièce (1) comprend une première interface de soudure (11),
- la deuxième pièce (2) comprend une deuxième interface de soudure (21), et dans lequel un espace est défini entre la deuxième interface de soudure (21) et la première interface de soudure (11) avant l'opération de soudure par friction simultanée des première et deuxième pièces sur la troisième pièce (3).

4. Générateur selon l'une des revendications précédentes, dans lequel la première interface de positionnement (41) et la deuxième interface de positionnement (42) sont agencées de sorte à bloquer temporairement six degrés de liberté entre la première et la deuxième pièce avant l'opération de soudure par friction.

5. Générateur selon l'une des revendications précédentes, dans lequel la première pièce (1) est une chambre contenant la matière pyrotechnique (6), la deuxième pièce (2) est un opercule et la troisième pièce (3) est un diffuseur.

6. Générateur selon l'une des revendications précédentes, dans lequel la quatrième pièce (4) est une grille agencée pour retenir la matière pyrotechnique (6) pendant un fonctionnement du générateur de gaz.

7. Générateur selon l'une des revendications précédentes dans lequel, avant l'opération de soudure par friction, une épaisseur de la deuxième pièce (2) au niveau de la deuxième interface de soudure (21) est comprise entre 33% et 66% d'une épaisseur de la première pièce (1) au niveau de la première interface de soudure (11).

8. Générateur de gaz suivant l'une des revendications précédentes, dans lequel un diamètre circonscrit à la deuxième interface de soudure (21) est le plus grand diamètre circonscrit de la deuxième pièce (2).

9. Générateur de gaz selon l'une des revendications précédentes, dans lequel la première interface de positionnement (41) de la quatrième pièce (4) présente une surface de contact continue avec la première pièce (1).

10. Générateur selon l'une des revendications précédentes, dans lequel, les première et deuxième interfaces de soudure présentent une forme cylindrique.

11. Générateur selon l'une des revendications précédentes dans lequel, les première, deuxième et quatrième pièces présentent des formes de coupelles avec un fond et une surface latérale,
dans lequel une portion de la surface latérale externe de la quatrième pièce (4) est en appui sur une portion de la surface latérale interne de la première pièce (1), et
dans lequel une portion de la surface latérale externe de la deuxième pièce (2) est en appui sur une portion de la surface latérale interne de la quatrième pièce (4).

12. Générateur de gaz suivant l'une des revendications 10 ou 11, dans lequel la deuxième interface de positionnement (42) est formée par une jonction entre la surface latérale (44) et le fond (43) de la quatrième pièce (4) et
dans lequel la forme femelle (22) de la deuxième pièce (2) est formée par une jonction entre la surface latérale (27) et le fond (26) de la deuxième pièce (2).

13. Module de sécurité comprenant un générateur de gaz selon l'une des revendications précédentes.

14. Véhicule automobile comprenant un module de sécurité selon la revendication précédente.

15. Procédé de fabrication d'un générateur suivant l'une des revendications précédentes, comprenant les opérations consistant à :
- positionner la quatrième pièce (4) sur la première pièce (1) par l'intermédiaire de la première interface de positionnement (41),
- positionner la deuxième pièce (2) sur la quatrième pièce (4) par l'intermédiaire de la deuxième interface de positionnement (42),
- effectuer l'opération de soudure par friction simultanée des première et deuxième pièces sur la troisième pièce (3).

## Patentansprüche

1. Gasgenerator für ein Sicherheitssystem, das Folgendes umfasst:
- wenigstens ein pyrotechnisches Material (6), das zum Erzeugen von Gasen angeordnet ist,
- ein erstes Teil (1),
- ein zweites Teil (2),
- ein drittes Teil (3),
- und ein viertes Teil (4), das sich von den vorherigen unterscheidet,
wobei das erste Teil (1) und das zweite Teil (2) mit dem dritten Teil (3) reibverschweißt sind,
**dadurch gekennzeichnet, dass** das vierte Teil (4) Folgendes umfasst:
- eine erste Grenzfläche zur Positionierung (41) mit dem ersten Teil (1),
- eine zweite Grenzfläche zur Positionierung (42) mit dem zweiten Teil (2),
um wenigstens einen Freiheitsgrad zwischen dem ersten und dem zweiten Teil zum Ermöglichen eines gleichzeitigen Reibschweißvorgangs des ersten und des zweiten Teils an das dritte Teil (3) vorübergehend zu blockieren.

2. Gasgenerator nach dem vorhergehenden Anspruch, wobei die erste Grenzfläche zur Positionierung (41) und die zweite Grenzfläche zur Positionierung (42) so angeordnet sind, dass durch eine Dreh- oder Verschiebungsbewegung des ersten Teils (1) während des Reibschweißvorgangs das zweite Teil (2) angetrieben wird.

3. Gasgenerator nach einem der vorhergehenden Ansprüche, wobei:
- das erste Teil (1) eine erste Schweißgrenzfläche (11) umfasst,
- das zweite Teil (2) eine zweite Schweißgrenzfläche (21) umfasst,
und wobei vor dem gleichzeitigen Reibschweißvorgang des ersten und des zweiten Teils an das dritte Teil (3) ein Raum zwischen der zweiten Schweißgrenzfläche (21) und der ersten Schweißgrenzfläche (11) definiert wird.

4. Generator nach einem der vorhergehenden Ansprüche, wobei die erste Grenzfläche zur Positionierung (41) und die zweite Grenzfläche zur Positionierung (42) so angeordnet sind, dass sie vor dem Reibschweißvorgang vorübergehend sechs Freiheitsgrade zwischen dem ersten Teil und dem zweiten Teil blockieren.

5. Generator nach einem der vorhergehenden Ansprüche, wobei das erste Teil (1) eine Kammer ist, die das pyrotechnische Material (6) enthält, das zweite Teil (2) ein Verschlussorgan ist und das dritte Teil (3) ein Diffusor ist.

6. Generator nach einem der vorhergehenden Ansprüche, wobei das vierte Teil (4) ein Gitter ist, das zum Zurückhalten des pyrotechnischen Materials (6) während eines Betriebs des Gasgenerators angeordnet ist.

7. Generator nach einem der vorhergehenden Ansprüche, wobei vor dem Reibschweißvorgang eine Dicke des zweiten Teils (2) in Höhe der zweiten Schweißgrenzfläche (21) von 33 % bis 66 % einer Dicke des ersten Teils (1) in Höhe der ersten Schweißgrenzfläche (11) beträgt.

8. Gasgenerator nach einem der vorhergehenden Ansprüche, wobei ein Umfangsdurchmesser der zweiten Schweißgrenzfläche (21) der größte Umfangsdurchmesser des zweiten Teils (2) ist.

9. Gasgenerator nach einem der vorhergehenden Ansprüche, wobei die erste Grenzfläche zur Positionierung (41) des vierten Teils (4) eine durchgehende Kontaktoberfläche mit dem ersten Teil (1) aufweist.

10. Generator nach einem der vorhergehenden Ansprüche, wobei die erste und die zweite Schweißgrenzfläche eine zylindrische Form aufweisen.

11. Generator nach einem der vorhergehenden Ansprüche, wobei das erste, das zweite und das vierte Teil die Formen von Schälchen mit einem Boden und einer seitlichen Oberfläche aufweisen,
wobei ein Abschnitt der äußeren seitlichen Oberfläche des vierten Teils (4) an einem Abschnitt der inneren seitlichen Oberfläche des ersten Teils (1) anliegt und
wobei ein Abschnitt der äußeren seitlichen Oberfläche des zweiten Teils (2) an einem Abschnitt der inneren seitlichen Oberfläche des vierten Teils (4) anliegt.

12. Gasgenerator nach einem der Ansprüche 10 oder 11, wobei die zweite Grenzfläche zur Positionierung (42) durch eine Verbindung zwischen der seitlichen Oberfläche (44) und dem Boden (43) des vierten Teils (4) gebildet wird und
wobei die Hohlform (22) des zweiten Teils (2) durch eine Verbindung zwischen der seitlichen Oberfläche (27) und dem Boden (26) des zweiten Teils (2) gebildet wird.

13. Sicherheitsmodul, das einen Gasgenerator nach einem der vorhergehenden Ansprüche umfasst.

14. Kraftfahrzeug, das ein Sicherheitsmodul nach dem vorhergehenden Anspruch umfasst.

15. Verfahren zum Herstellen eines Generators nach einem der vorhergehenden Ansprüche, das die Vorgänge umfasst, die aus Folgenden bestehen:
- Positionieren des vierten Teils (4) an dem ersten Teil (1) mittels der ersten Grenzfläche zur Positionierung (41),
- Positionieren des zweiten Teils (2) an dem vierten Teil (4) mittels der zweiten Grenzfläche zur Positionierung (42),
- Durchführen des gleichzeitigen Reibschweißvorgangs des ersten und des zweiten Teils an das dritte Teil (3).

## Claims

1. Gas generator for a safety system, comprising:
- at least one pyrotechnic material (6) arranged to produce gases,
- a first part (1),
- a second part (2),
- a third part (3),
- and a fourth part (4) separate from the preceding parts,
the first part (1) and the second part (2) being friction welded to the third part (3),
**characterized in that** the fourth part (4) comprises:
- a first interface (41) for positioning together with the first part (1),
- a second interface (42) for positioning together with the second part (2),
so as to temporarily block at least one degree of freedom between the first and the second part to allow a simultaneous friction welding operation of the first and the second part on the third part (3).

2. Gas generator according to the preceding claim, wherein the first positioning interface (41) and the second positioning interface (42) are arranged so that a rotational or translational movement of the first part (1) during the friction welding operation moves the second part (2).

3. Gas generator according to either of the preceding claims, wherein:
- the first part (1) comprises a first welding interface (11),
- the second part (2) comprises a second welding interface (21),
and wherein a space is defined between the second welding interface (21) and the first welding interface (11) prior to the simultaneous friction welding operation of the first and the second part on the third part (3).

4. Generator according to any of the preceding claims, wherein the first positioning interface (41) and the second positioning interface (42) are arranged so as to temporarily block six degrees of freedom between the first and the second part prior to the friction welding operation.

5. Generator according to any of the preceding claims, wherein the first part (1) is a chamber containing the pyrotechnic material (6), the second part (2) is a cover and the third part (3) is a diffuser.

6. Generator according to any of the preceding claims, wherein the fourth part (4) is a grate arranged to retain the pyrotechnic material (6) during operation of the gas generator.

7. Generator according to any of the preceding claims, wherein, prior to the friction welding operation, a thickness of the second part (2) at the second welding interface (21) is between 33% and 66% of a thickness of the first part (1) at the first welding interface (11).

8. Gas generator according to any of the preceding claims, wherein a diameter circumscribed to the second welding interface (21) is the largest circumscribed diameter of the second part (2).

9. Gas generator according to any of the preceding claims, wherein the first positioning interface (41) of the fourth part (4) has a continuous contact surface with the first part (1).

10. Generator according to any of the preceding claims, wherein the first and the second welding interface have a cylindrical shape.

11. Generator according to any of the preceding claims, wherein the first, the second and the fourth part have the shapes of cups having a bottom and a lateral surface,
wherein a portion of the outer lateral surface of the fourth part (4) is supported on a portion of the inner lateral surface of the first part (1), and
wherein a portion of the outer lateral surface of the second part (2) is supported on a portion of the inner lateral surface of the fourth part (4).

12. Gas generator according to either claim 10 or claim 11, wherein the second positioning interface (42) is formed by a junction between the lateral surface (44) and the bottom (43) of the fourth part (4) and
wherein the female shape (22) of the second part (2) is formed by a junction between the lateral surface (27) and the bottom (26) of the second part (2).

13. Safety module comprising a gas generator according to any of the preceding claims.

14. Motor vehicle comprising a safety module according to the preceding claim.

15. Method for manufacturing a generator according to any of the preceding claims, comprising the steps of:
- positioning the fourth part (4) on the first part (1) by means of the first positioning interface (41),
- positioning the second part (2) on the fourth part (4) by means of the second positioning interface (42),
- performing the simultaneous friction welding operation of the first and the second part on the third part (3).
